# FASCICULE DE BREVET EUROPEEN

(11) **EP 3 865 339 B1**
(45) Date de publication et mention de la délivrance du brevet: **04.10.2023**
(21) Numéro de dépôt: 21156018.0
(22) Date de dépôt: 09.02.2021
(51) Int. Cl.: B60N 2/005, B60N 2/24, B60R 13/02, B60R 22/18

(54) **SYSTEME D'INSTALLATION D'AU MOINS UN SIEGE DIT ARRIERE DANS UNE CABINE DE CAMION, CABINE DE CAMION COMPRENANT UN TEL SYSTEME ET PROCEDE DE MONTAGE D'UN TEL SYSTEME DANS UNE CABINE DE CAMION**
SYSTEM ZUM EINBAU VON MINDESTENS EINEM SOGENANNTEN RÜCKSITZ IN EIN LKW-FAHRERHAUS, LKW-FAHRERHAUS MIT EINEM SOLCHEN SYSTEM UND VERFAHREN ZUM EINBAU EINES SOLCHEN SYSTEMS IN EIN LKW-FAHRERHAUS
SYSTEM FOR INSTALLING AT LEAST ONE REAR SEAT IN A LORRY CAB, LORRY CAB COMPRISING SUCH A SYSTEM AND METHOD FOR INSTALLING SUCH A SYSTEM IN A LORRY CAB

(30) Priorité: 14.02.2020 FR 2001509
(43) Date de publication de la demande: 18.08.2021
(73) Titulaire: Gaillard Location, 15000 Aurillac (FR)
(72) Inventeur: RIOU, Sébastien, 15130 YTRAC (FR); THEIL, Olivier, 15130 VEZAC (FR)
(74) Mandataire: Fidal Innovation

(56) Documents cités:
- WO-A1-2005/002916
- FR-A1- 2 903 351

## Description

### DOMAINE DE L'INVENTION

La présente invention se rapporte au domaine des cabines de camion, et plus précisément au domaine de la transformation des cabines de camions initialement destinés au transport routier de marchandises ou d'équipements.

### ARRIERE-PLAN TECHNOLOGIQUE

Les types de camion dont il est question ici sont ceux appelés camions porteurs, camions remorques, ou encore camions articulés, et comprennent typiquement une cabine motorisée ainsi qu'un système permettant à la cabine de se connecter à et de tirer un chargement. A cet effet, le camion peut comprendre une plateforme destinée à recevoir un chargement. La cabine et la plateforme sont liées ensemble, généralement à l'aide d'une liaison articulée, et comprennent des roues. En variante, le camion comprend un container ou plusieurs containers roulant, les containers étant reliés entre eux et à la cabine grâce à des liaisons articulées.

La cabine comprend les commandes de pilotage du camion pour le conducteur. Un camion de transport routier est en général prévu pour faire des trajets pouvant durer plusieurs jours, de sorte que la cabine est aménagée à cet effet. Notamment, une couchette est généralement prévue derrière le ou les sièges avant, c'est-à-dire le siège pour le conducteur et un ou plusieurs passagers. Une cabine de camion est ainsi en général prévue pour accueillir deux personnes, voire trois, dont le conducteur, sur les sièges avant.

Cependant, il peut être nécessaire de transporter plus de passagers. C'est notamment le cas lorsque la cabine est destinée à la formation des futurs conducteurs de poids-lourds, lorsque le camion est destiné à transporter des équipements de sport qui accompagnent un staff sportif, ou encore lorsque le camion est destiné à être un camion remorque et que les passagers du véhicule remorqué doivent être transportés. De tels usages ne nécessitent plus l'utilisation d'une couchette.

Ainsi, il est souhaitable de pouvoir ajouter des sièges arrière, à la place de la couchette, derrière les sièges avant, afin d'augmenter la capacité de transport de personnes de la cabine.

Ces sièges arrière doivent répondre aux normes et homologations en termes de sécurité. Notamment, l'ancrage des sièges et les points de fixation des ceintures de sécurité doivent tenir des sollicitations mécaniques minimales imposées.

Le document FR 2 910 429 décrit un exemple dans lequel une cabine de camion est modifiée pour y ajouter des sièges. Selon cet exemple, le châssis de la cabine est modifié pour y ajouter des profilés transversaux. Ces profilés prennent appui directement sur le châssis de la cabine, étant montés sur une paroi arrière de la cabine, ou prenant appui contre un arceau interne. Ils comprennent des points d'ancrage pour les ceintures de sécurité.

Toutefois, cette solution est complexe à mettre en oeuvre. En effet, elle modifie l'intégrité du châssis de la cabine, l'appui des profilés transversaux sur le châssis devant nécessairement être fixe et rigide. Ainsi, le démontage par exemple pour revenir à la configuration d'origine peut fragiliser l'intégrité de la cabine.

En outre, elle implique de monter les profilés transversaux, puis les sièges et les points de fixation des ceintures de sécurité. Ainsi, depuis le démontage de la couchette jusqu'à l'installation des sièges arrière, le temps nécessaire peut prendre environ 15 jours.

Le document FR 2 903 351 décrit un dispositif d'assise pour véhicule, un véhicule équipé d'un tel dispositif et un procédé de montage d'un tel dispositif dans un véhicule.

Le document WO 2005/002916 décrit un dispositif d'assise pour une utilisation sur un véhicule comprenant une zone de transport plate.

L'invention vise alors notamment à apporter une solution aux inconvénients précités.

Ainsi, un premier objet de l'invention est de proposer une solution pour ajouter des sièges dans une cabine de camion simplement et rapidement.

Un deuxième objet de l'invention est de proposer une solution pour ajouter des sièges dans une cabine de camion, sans toucher à l'intégrité du châssis de la cabine, de manière à permettre le retour à une configuration initiale de la cabine.

Un troisième objet de l'invention est de proposer une solution pour ajouter des sièges dans une cabine de camion répondant aux exigences en matière de sécurité.

Un quatrième objet de l'invention est de proposer une solution pour ajouter des sièges dans une cabine de camion tout en assurant un esthétisme de l'intérieur de la cabine.

Un cinquième objet de l'invention est de proposer une solution pour ajouter des sièges dans une cabine de camion à un coût réduit.

### RESUME DE L'INVENTION

Ainsi, selon un premier aspect, l'invention se rapporte à un système d'installation d'au moins un siège dit arrière dans une cabine de camion, la cabine comprenant au moins un siège dit avant. Le système d'installation comporte :
- un ensemble de siège comprenant au moins deux points d'ancrage d'une ceinture de sécurité ;
- un ensemble de fixation destiné à fixer rigidement l'ensemble de siège sur une paroi de la cabine.

En outre, l'ensemble de fixation comporte au moins un élément de fixation. L'élément de fixation comprend notamment un crampon et une entretoise qui est solidaire du crampon par l'intermédiaire d'un dispositif de serrage permettant de régler la force de serrage entre le crampon et l'entretoise. Le crampon est particulièrement destiné à être inséré dans une ouverture préexistante d'une paroi de la cabine de camion de sorte que l'élément de fixation serre la paroi entre le crampon et l'entretoise. L'entretoise comprend en outre un dispositif de fixation rigide sur l'ensemble de siège.

Le système d'installation permet ainsi de modifier rapidement l'intérieur de la cabine du camion afin d'augmenter le nombre de sièges pour accueillir au moins un passager supplémentaire. En effet, le dispositif de serrage permet notamment une mise en place du système d'installation sans dégrader l'intégrité de la structure du châssis de la cabine de camion. La mise en place des points d'ancrage de ceinture de sécurité sur l'ensemble de siège, lequel est fixé sur une paroi de la cabine, permet de répondre aux normes en matière de sécurité routière pour le ou les passagers.

Selon différents aspects, il est possible de prévoir l'une et/ou l'autre des dispositions ci-dessous.

Selon une réalisation, au moins une assise est fixée rigidement à l'ensemble de siège, permettant à un passager de s'assoir confortablement sur l'assise.

Selon une réalisation, le dispositif de serrage peut comprendre au moins une vis de solidarisation insérée dans un perçage de l'entretoise et dans un perçage du crampon. La force de serrage entre le crampon et l'entretoise est alors réglée par le serrage de la vis de solidarisation.

Selon une réalisation, l'ensemble de siège peut comprendre deux supports de sièges, à savoir un support dit supérieur destiné à supporter au moins un dossier d'un siège et un support dit inférieur destiné à supporter au moins une assise d'un siège. Le support supérieur et le support inférieur sont destinés à être fixés à au moins une paroi de la cabine de camion à l'aide de l'ensemble de fixation. Le montage du système d'installation à l'intérieur de la cabine du camion s'en trouve facilité.

Selon un deuxième aspect, l'invention se rapporte à une cabine de camion comprenant au moins un siège dit avant, la cabine comportant en outre au moins un système d'installation tel que présenté ci-dessus. L'ensemble de siège est fixé rigidement sur au moins une paroi de la cabine à l'aide d'un ensemble de fixation, un crampon d'au moins un élément de fixation de l'ensemble de fixation étant inséré dans une ouverture préexistante de la paroi de la cabine de camion. L'élément de fixation serre alors la paroi de la cabine entre le crampon et l'entretoise. L'entretoise est en outre fixée rigidement sur l'ensemble de siège de manière à s'étendre entre la paroi et l'ensemble d'assise.

La cabine de camion permet ainsi de proposer des sièges supplémentaires répondant aux normes en matière de sécurité routière, tout en pouvant revenir à une configuration sans le système d'installation, augmentant les possibilités d'utilisation de la cabine.

Selon un troisième aspect, l'invention se rapporte à un procédé de montage d'un système d'installation d'au moins un siège tel que présenté ci-dessus dans une cabine de camion. La cabine de camion comprend notamment au moins un siège dit avant et une couchette située derrière le siège avant, le procédé comprenant les étapes suivantes :
- le retrait de la couchette ;
- le retrait d'au moins une partie du garnissage d'au moins une paroi du châssis de la cabine de manière à révéler au moins en partie ladite paroi comprenant une ouverture préexistante ;
- la fixation de l'ensemble de siège sur la paroi arrière au moyen de l'ensemble de fixation et le réglage de la force de serrage d'au moins un élément de fixation de l'ensemble de fixation.

Le système d'installation se monte ainsi à la manière d'un kit dans la cabine de camion. Aucune intervention sur la structure de la cabine du camion n'est requise, facilitant le montage. L'ensemble de sièges est prêt à être fixé directement au moyen de l'ensemble de fixation. Le démontage se fait en réalisant les opérations inverses, laissant la structure de la cabine du camion indemne.

Selon une réalisation, la fixation sur l'ensemble de siège d'au moins une assise de siège est réalisée après la fixation de l'ensemble de siège sur la paroi arrière au moyen de l'ensemble de fixation. La manipulation de l'ensemble de siège pour sa fixation dans la cabine est ainsi facilitée.

Selon une autre réalisation, la fixation sur l'ensemble de siège d'au moins une assise de siège est réalisée avant la fixation de l'ensemble de siège sur la paroi arrière au moyen de l'ensemble de fixation. La fixation de l'assise en dehors de la cabine est plus simple, le nombre d'opérations à effectuer dans l'espace réduit à l'intérieur de la cabine étant réduit.

Selon une réalisation, le procédé peut comprendre initialement la détermination d'un modèle numérique du châssis de la cabine de camion et la détermination de caractéristiques du système d'installation de manière à le faire correspondre au châssis de la cabine.

Selon une réalisation, la détermination de caractéristiques du système d'installation peut comprendre la détermination de la position des perçages de l'ensemble de sièges pour coïncider avec des ouvertures et/ou des perçages préexistants sur la paroi du châssis de la cabine, et des dimensions des éléments de fixation.

Des éléments d'habillage ou de camouflage peuvent en outre être aisément mis en place à l'intérieur de la cabine de camion afin de masquer des portions du châssis éventuellement mis à jour pour le montage du système d'installation.

### BREVE DESCRIPTION DES DESSINS

Des modes de réalisation de l'invention seront décrits ci-dessous par référence aux dessins, décrits brièvement ci-dessous :
[Fig. 1] représente une vue de derrière d'un système d'installation d'au moins un siège dit arrière dans une cabine de camion selon un mode de réalisation ;
[Fig. 2] représente une vue de trois-quarts du système de la figure 1 et d'une partie du châssis d'une cabine de camion ;
[Fig. 3] représente une vue de côté d'une partie du châssis d'une cabine de camion sur laquelle le système d'installation de la figure 1 est monté ;
[Fig. 4a] est une vue de face avant de la figure 3 ;
[Fig. 4b] est une vue de face arrière de la figure 3 ;
[Fig. 5a] est une vue, selon un premier sens, de trois quart éclatée d'un élément de fixation du système d'installation ;
[Fig. 5b] est une vue, selon un deuxième sens, de trois quart éclatée de l'élément de fixation de la figure 5a ;

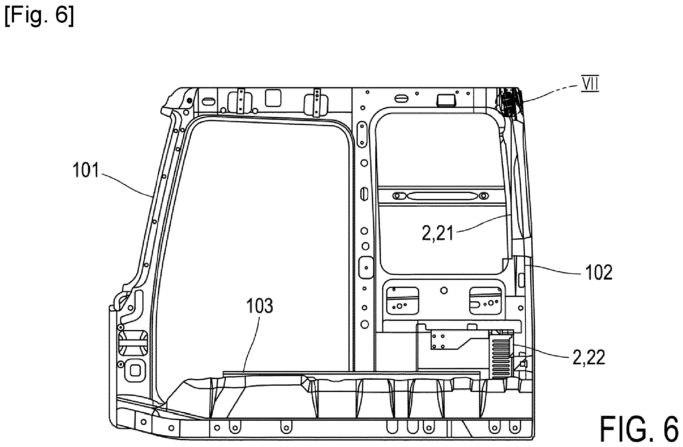

[Fig. 6] est une vue en coupe selon la ligne VI-VI de la figure 4 ;
[Fig. 7] est une vue de détail de la figure 6 ;
[Fig. 8] est une vue en coupe selon la ligne VIII-VIII de la figure 4 ;
[Fig. 9] est une vue de détail de la figure 8 ;
[Fig. 10] est une vue en coupe selon la ligne X-X de la figure 4 ;
[Fig. 11] est une vue de détail de la figure 10.

Sur les dessins, des références identiques désignent des objets identiques ou similaires.

### DESCRIPTION DETAILLEE

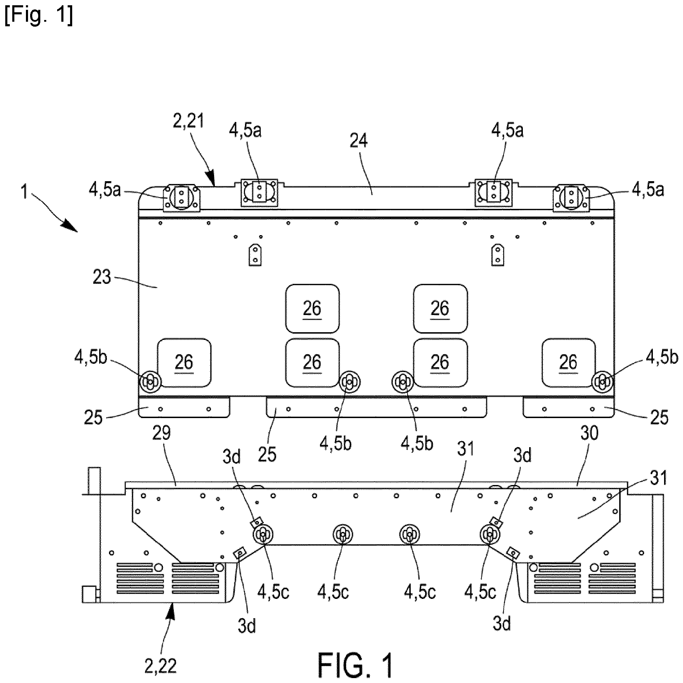

Sur la figure 1, il est représenté un système 1 d'installation d'au moins un siège dit arrière, spécialement destiné à être monté dans une cabine 100 d'un camion. De manière typique, la cabine 100 comprend déjà au moins un siège avant, pour le conducteur.

Dans ce qui suit, les termes avant, arrière, devant, derrière et leurs variantes, sont utilisés dans leur acceptation usuelle par rapport au sens de déplacement du camion, lorsque le système 1 est monté dans la cabine du camion.

En général, le système 1 d'installation vise à permettre le montage de plus d'un siège arrière. Selon le mode de réalisation présenté ici, sans toutefois que cela soit limitatif, le système 1 d'installation permet le montage de quatre sièges arrière. En pratique, les sièges arrière sont montés sensiblement perpendiculairement à la direction de déplacement du camion, et leur nombre est fonction de la largeur de la cabine.

Le système 1 d'installation comprend un ensemble 2 de sièges, c'est-à-dire un ensemble prévu pour supporter les sièges arrière.

Dans ce qui suit, on définit un siège comme tout dispositif permettant à un être humain de s'assoir. Un siège comprend au moins une assise et éventuellement un dossier. Ainsi, l'ensemble 2 de siège est prévu pour être fixé rigidement à au moins une assise, et éventuellement au moins un dossier.

Par l'expression « fixation rigide », et ses variantes, on entend ici une fixation qui n'autorise aucun mouvement relatif entre deux éléments fixés rigidement l'un à l'autre sous l'effet des efforts attendus pendant l'utilisation du système 1 d'installation lorsqu'il est monté dans une cabine de camion, sauf selon les jeux d'usage. En particulier, l'expression « fixation rigide » doit être comprise ici comme répondant aux normes en matière de sécurité routière.

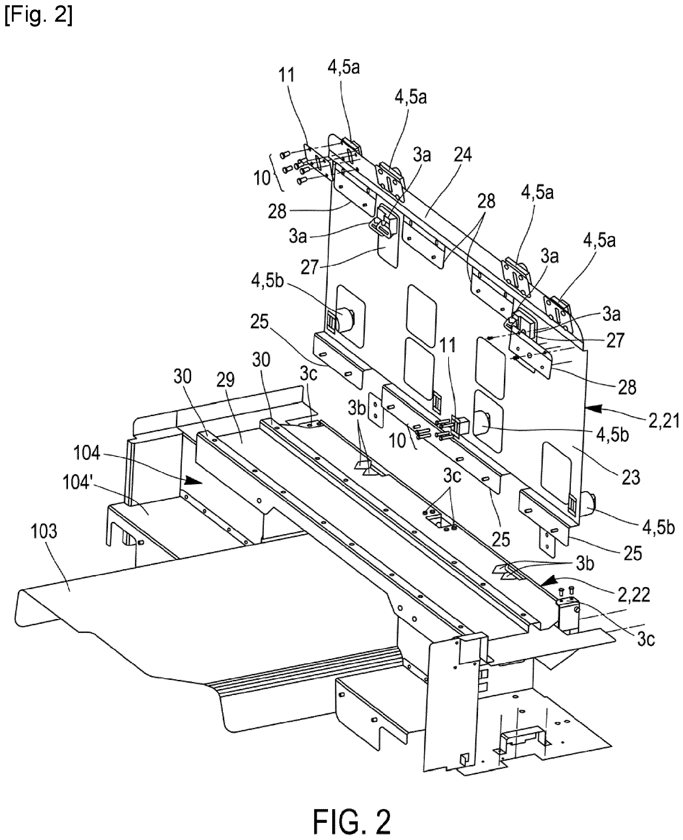

L'ensemble 2 de siège présente au moins deux points d'ancrage d'une ceinture de sécurité. Selon l'exemple présenté sur les figures, et notamment sur les figures 1 et 2, l'ensemble 2 de sièges comprend, pour chaque siège prévu, au moins un point **3a** d'ancrage supérieur, un point **3b** d'ancrage inférieur, un point **3c** d'ancrage boucle et un point **3d** d'ancrage enrouleur. Les points 3a, 3b, 3c, 3d d'ancrage constituent les lieux où les efforts mécaniques sont exercés sur l'ensemble 2 de sièges pour retenir un passager assis sur un siège de l'ensemble 2 de sièges.

Selon le mode de réalisation des figures, l'ensemble 2 de siège comprend deux supports, à savoir un support **21** dit supérieur et un support **22** dit inférieur. Le support 21 supérieur est destiné à supporter au moins un dossier de siège, et le support 22 inférieur est destiné à supporter au moins une assise de siège.

Plus précisément, le support 21 supérieur se présente sous la forme d'une plaque pliée et découpée, comprenant une surface **23** principale dont deux bords opposés sont prolongés par des pattes **24, 25,** à savoir, selon le mode de réalisation illustré, une patte **24** supérieure servant à la fixation sur une paroi du châssis de la cabine de camion et plusieurs pattes 25 inférieures servant à la fixation des dossiers de sièges. La surface 23 principale peut comprendre des lumières **26** notamment pour des raisons d'économie de matière.

La surface 23 principale est sensiblement plane, et la patte 24 supérieure forme un décroché permettant de positionner l'inclinaison de la surface 23 principale par rapport à la paroi arrière de la cabine de camion comme cela sera explicité plus loin. La surface 23 principale comprend en outre le au moins un point 3a d'ancrage supérieur d'une ceinture de sécurité. Selon l'exemple illustré, la surface 23 principale comprend quatre points 3a d'ancrage supérieur, c'est-à-dire un point 3a d'ancrage supérieur par siège arrière prévu. Afin de renforcer leur tenue mécanique, les points 3a d'ancrage supérieur sont localisés sur une tôle **27** de renfort. Plus précisément, selon l'exemple illustré, deux tôles 27 de renfort sont fixées rigidement sur la surface 23 principale, deux points d'ancrage supérieur étant formés sur chaque tôle 27 de renfort.

Le support 21 supérieur comprend en outre au moins une, et selon l'exemple quatre, barres **28** de fixation fixées rigidement à une face avant de la surface 23 principale. Chaque barre 28 de fixation permet d'y fixer rigidement un dossier de siège.

Le support 22 inférieur comprend deux parties. Ainsi, le support 22 inférieur comprend une première partie formant surface **29** d'assise, présentant des pliures **30** sur lesquelles les assises sont fixées rigidement. Le support 22 inférieur comprend une deuxième partie formant un rebord **31** de fixation. Les deux parties 29, 31 sont par exemple formées chacune par une tôle pliée et découpée, puis fixées l'une à l'autre par exemple par un système de type visserie et/ ou par soudure.

Le système 1 d'installation comprend de plus un ensemble **4** de fixation destiné à fixer rigidement l'ensemble 2 de sièges sur une paroi, de préférence une paroi arrière, de la cabine, comme cela sera explicité plus loin.

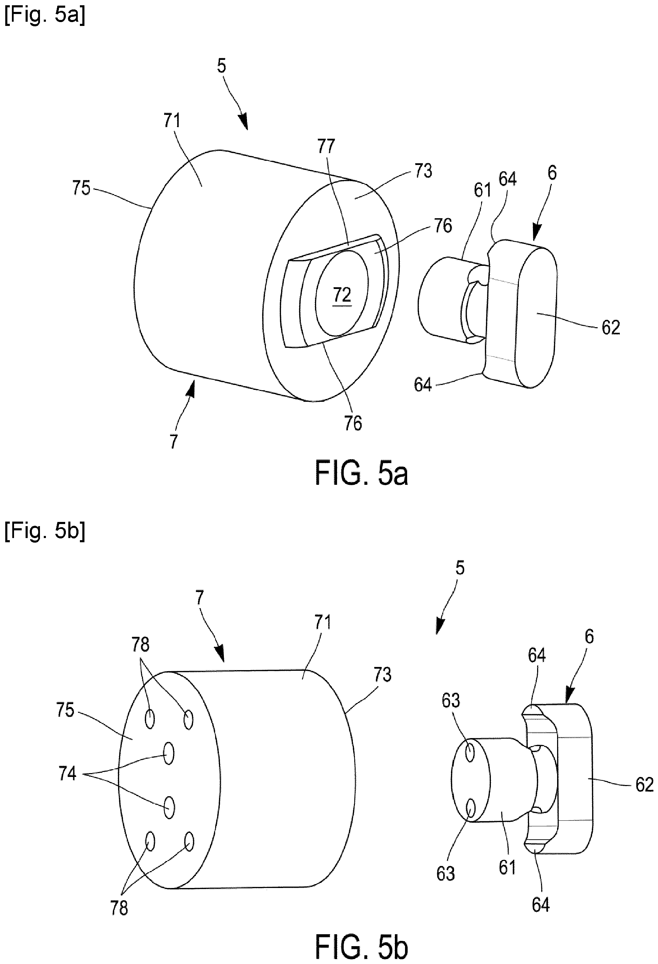

Plus précisément, l'ensemble 4 de fixation comporte au moins un élément **5** de fixation, représenté notamment sur les figures 5a et 5b.

Chaque élément 5 de fixation comprend un crampon **6** et une entretoise **7** solidaire du crampon 6 par l'intermédiaire d'un dispositif **8** de serrage permettant de régler la force de serrage entre le crampon 6 et l'entretoise 7. Le crampon 6 est destiné à être inséré dans une ouverture préexistante d'une paroi du châssis de la cabine de camion de sorte que l'élément 5 de fixation serre cette paroi entre le crampon 6 et l'entretoise 7. L'entretoise 7 comprend en outre un dispositif **9** de fixation rigide sur l'ensemble 2 de siège.

Plus précisément, selon le mode de réalisation présenté ici, le crampon 6 comprend un corps **61** sensiblement cylindrique surmonté d'une tête **62** de forme oblongue. Le corps 61 comprend deux perçages **63** filetés de réglage. L'entretoise 7 comprend également un corps **71** cylindrique et comprend en outre un logement **72** central débouchant sur une face **73** arrière du corps 71. L'entretoise 7 présente en outre deux perçages **74** de réglage, non filetés, débouchant d'une part sur une face **75** avant du corps 71 et d'autre part dans le logement 72.

Le corps 61 du crampon 6 est inséré dans le logement 72 central de l'entretoise 7 de sorte que les perçages 63 de réglage du crampon 6 soient positionnés coaxiaux aux perçages 74 de réglage de l'entretoise 7. La tête 62 du crampon 6 émerge hors du logement 72 central de l'entretoise 7, du côté de la face 73 arrière. Le dispositif 8 de serrage comprend alors par exemple deux vis **81,** insérées dans les perçages 63, 74 de réglage coaxiaux du crampon 6 et de l'entretoise 7. Le serrage des vis 81 permet de régler la force de serrage entre le crampon 6 et l'entretoise 7, et plus précisément entre la tête 62 du crampon 6 et la face 73 arrière de l'entretoise 7.

La face 73 arrière de l'entretoise 7 comprend un bossage **76** centré sur l'ouverture du logement 72 central. Le bossage 76 forme deux surfaces **77** de guidage, sensiblement parallèles en elles. La tête 62 du crampon forme deux becs **64,** s'étendant vers le corps 61 du crampon. Chaque bec 64 se positionne en face d'une surface 77 de guidage de l'entretoise 7 afin d'assurer le bon positionnement des perçages 63, 74 pour autoriser l'insertion des vis du dispositif 8 de serrage.

Comme cela sera explicité plus loin, selon le mode de réalisation des figures, la face 75 avant de l'entretoise 7 comprend en outre quatre perçages **78** destinés à permettre la fixation rigide de l'entretoise 7 sur l'ensemble 2 de sièges.

Le système 1 d'installation permet de monter des sièges arrière dans la cabine 100 d'un camion.

La cabine 100 est le lieu prévu pour qu'un conducteur s'y installe, et comprend donc à cet effet au moins un siège avant pour le conducteur. En général, un deuxième siège avant pour un passager est prévu à côté du siège avant. Le châssis de la cabine 100 est réalisé de manière connue par un assemblage de tôles et de profilés en acier.

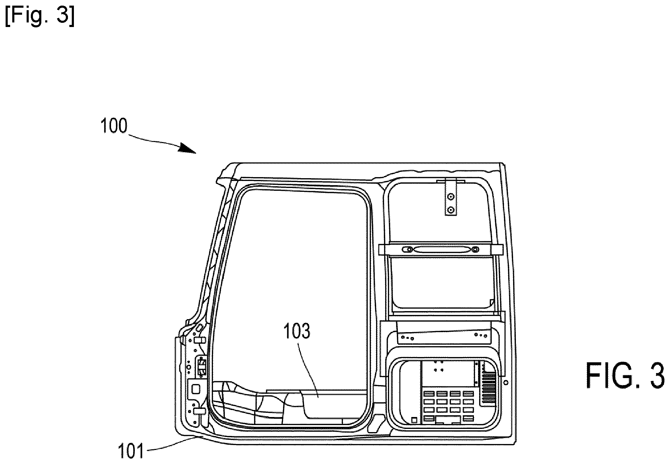

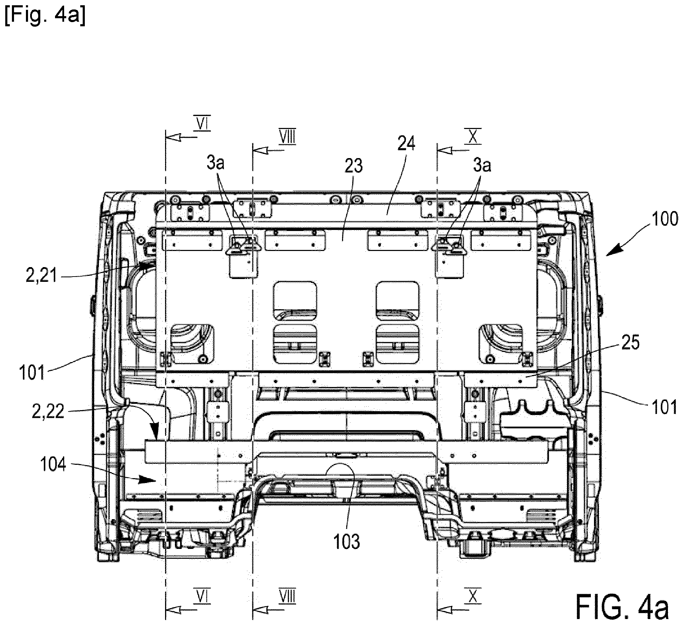

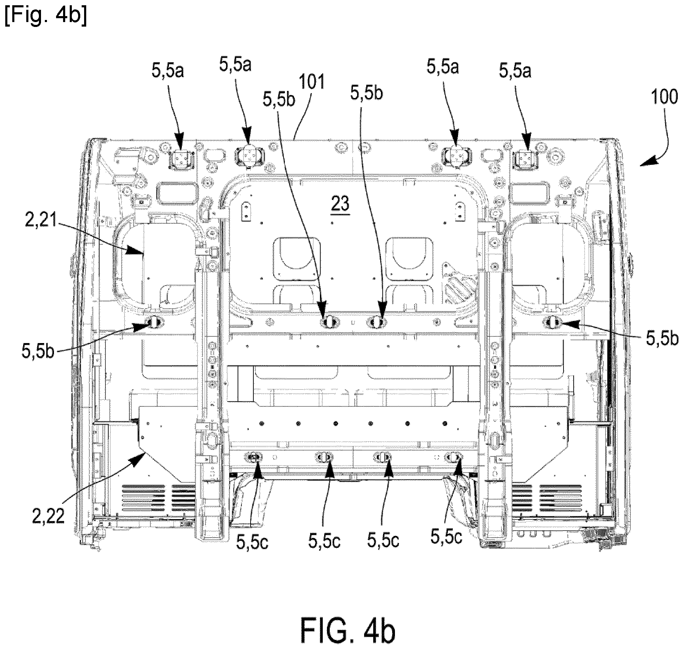

Plus précisément, comme représenté sur les figures 3 et 4a, 4b, le châssis de la cabine 100 comprend notamment deux parois **101** latérales sur lesquelles les portières seront montées, une paroi avant (non représentée), sur laquelle le pare-brise sera monté et une paroi **102** arrière. Le sol (non représenté) de la cabine 100 présente notamment un longeron **103** s'étendant de l'avant vers l'arrière de la cabine 100 et un plancher. Un toit (non représenté) referme la cabine 100.

Entre les sièges avant et la paroi 102 arrière, la cabine 100 comprend un espace destiné à l'origine à l'installation d'une couchette. Sur les figures notamment 2, 3 et 4, la couchette a déjà été retirée.

Il va maintenant être décrit comment le système 1 d'installation selon le mode de réalisation des figures est monté dans la cabine 100 du camion.

La marque et le modèle du camion sont préalablement pris en compte, afin de déterminer les caractéristiques du châssis de la cabine En effet, en fonction de la marque et du modèle, le châssis présente notamment des ouvertures et des perçages à des endroits définis. Les ouvertures ont par exemple pour fonction de renforcer la résistance mécanique du châssis tout en économisant de la matière. Les perçages permettent notamment de fixer sur le châssis différents éléments, tels que la couchette, la garniture ou des caissons de rangement.

Un caisson **104** est mis au point afin de venir en position dans l'espace destiné à l'origine à l'installation d'une couchette. Le caisson 104 est fixé rigidement au châssis de la cabine 100, notamment au sol, afin de permettre le montage du support 22 inférieur. Eventuellement, le caisson 104 peut être accompagné d'un marchepied 104', destiné à offrir une surface de support aux pieds des personnes assises sur le support 22 inférieur. Le marchepied 104' est par exemple fixé entre le caisson 104 et le sol de la cabine 100. Le caisson 104 et le marchepied 104' permettent alors notamment de positionner le support 2 inférieur à une hauteur confortable pour les passagers.

Les caractéristiques du système 1 d'installation sont déterminées de manière à le faire correspondre au châssis de la cabine 100, et plus précisément de manière à permettre de fixer l'ensemble 2 à l'aide de l'ensemble 4 de fixation sur la paroi 102 arrière sans devoir ajouter de perçages sur la paroi 102 arrière. Ainsi, les caractéristiques du système 1 d'installation déterminées sont notamment la position des perçages de l'ensemble 2 de sièges pour coïncider avec des ouvertures et/ou des perçages préexistants sur la paroi 102 arrière, et les dimensions des éléments 5 de fixation en fonction également de la paroi 102 arrière. Les dimensions et la forme du support 21 supérieur et du support 22 inférieur sont également déterminées en fonction des caractéristiques du châssis. Notamment, les deux parties 29, 31 du support 22 inférieur sont pliées et découpées pour s'adapter sur le coffrage 104 dans l'espace arrière de la cabine 100. Par exemple, l'ensemble 2 de sièges et les éléments 5 de fixation sont conçus à l'aide d'un outil de CAO et d'un modèle numérique du châssis de la cabine 100.

Le système 1 d'installation peut être accompagné d'éléments d'habillage et de camouflage de la cabine 100, ces éléments étant déterminés à partir par exemple du modèle numérique du châssis de la cabine 100. En effet, une fois la couchette retirée, le châssis peut présenter un certain nombre de découpes et de perçages devenus inutiles, au moins temporairement, avec l'ensemble 2 de sièges. Les éléments d'habillage et de camouflage permettent de masquer ces découpes et perçages, augmentant le confort et l'esthétisme pour les passagers à l'intérieur de la cabine 100.

Lorsque la cabine 100 comprend une couchette, cette dernière est démontée du châssis et retirée hors de la cabine 100. La garniture recouvrant le châssis est également démontée, au moins en partie, de manière à découvrir la paroi 102 arrière du châssis et le coffrage 104.

L'arrière de la paroi 102 n'est pas accessible, le châssis étant recouvert par la carrosserie du camion. Ainsi, chaque élément 5 de fixation est préalablement inséré dans un perçage ou une ouverture coïncidant de la paroi 102 arrière de la cabine 100 en introduisant la tête 62 du crampon 6, laquelle se trouve alors derrière la paroi 102 arrière.

Plus précisément, les ouvertures ou perçages de la paroi 102 arrière sont en général de forme oblongue, une dimension étant supérieure à une autre. En outre, les bords des ouvertures ou perçages de la paroi 102 arrière présentent un ourlet **105** pour renforcer la structure. La tête 62 du crampon est dimensionnée en fonction des dimensions du perçage ou de l'ouverture de manière à pouvoir y être insérée. Les becs 64 du crampon 6 et le bossage 76 de l'entretoise 7 sont également dimensionnés de sorte que lorsque l'élément 5 de fixation est pivoté, les becs 64 viennent en prise avec l'ourlet 105 de l'ouverture ou du perçage du côté arrière de la paroi 102 arrière, et le bossage 76 et la face 73 arrière de l'entretoise 7 vienne en contact avec une face avant de la paroi 102 arrière. Ainsi, la paroi 102 arrière est pincée entre la tête 62 du crampon 6 et le corps 71 de l'entretoise 7.

L'ensemble 2 spécialement mis au point est alors introduit et monté dans la cabine 100. A cet effet, selon le mode de réalisation présenté ici, le support 21 supérieur et le 22 inférieur sont montés successivement, de manière à faciliter la manipulation et l'introduction dans la cabine 100.

Par exemple, le support 22 inférieur est d'abord monté dans la cabine. Il est positionné sur le coffrage 104, et fixé à la paroi 102 arrière à l'aide d'au moins un, en pratique quatre éléments 5 de fixation. D'autres lieux de fixation peuvent être prévus, par exemple sur le coffrage 104. Puis, le support 21 supérieur est monté à son tour et fixé à la paroi 102 arrière à l'aide d'au moins un, en pratique huit éléments 5 de fixation. Le montage successif des supports 21, 22 permet de faciliter leur manipulation.

Les supports 21, 22 sont appliqués contre les éléments 5 de fixation, les ouvertures coïncidant avec les éléments 5 de fixation montés sur la paroi 102 arrière. Le corps 71 de l'entretoise de chaque élément 5 est fixé rigidement sur un des supports 21, 22, à l'aide d'un dispositif de fixation rigide comprenant par exemple au moins une vis 10 de montage et une plaque 11 de montage.

Les vis 81 du dispositif 8 de serrage sont serrées de manière à procurer un effort de serrage sur la paroi 102 arrière qui est suffisant vis-à-vis des exigences en matière de tenue mécanique tout en ne déformant pas, ni ne transperçant, la tôle de la paroi 102 arrière : la paroi 102 arrière est serrée entre la tête 62 du crampon et la face 73 arrière.

Bien qu'il n'ait été présenté ici que la fixation de l'ensemble 2 de sièges sur la paroi 102 arrière, il peut être envisagé, en variante ou en combinaison, d'utiliser des éléments 5 de fixation entre l'ensemble 2 de sièges et toute autre paroi du châssis, notamment les parois 101 latérales et/ou le sol.

En outre, les éléments 5 de fixation peuvent également être utilisés pour fixer sur le châssis tout autre élément du système 1 d'installation, par exemple le caisson 104 et le marchepied 104'.

Selon le mode de réalisation présenté ici, l'ensemble 4 de fixation comprend une pluralité d'éléments 5 de fixation qui peuvent être répartis en trois groupes :
- un premier groupe d'éléments **5a** de fixation supérieurs, pour assurer une fixation en partie supérieure de la cabine ;
- un deuxième groupe d'éléments **5b** de fixation intermédiaires ;
- un troisième groupe d'éléments **5c** de fixation inférieurs, pour assurer une fixation en partie inférieure de la cabine.

Dans ce qui suit, les termes inférieur, supérieur et leurs variantes font référence à l'orientation naturelle des figures lorsque le système 1 d'installation est monté dans une cabine de camion.

Les éléments 5a, 5b, 5c de fixation peuvent différer entre chaque groupe, comme cela est le cas dans le mode de réalisation présenté ici, car les caractéristiques mécaniques, et notamment concernant les propriétés de tenue mécanique, ainsi que les caractéristiques géométriques peuvent différer entre les éléments 5a, 5b, 5c de chaque groupe. Cependant, le principe de fonctionnement des éléments de fixation reste le même.

On va maintenant comparer les éléments 5 de fixation de chaque groupe. Les références utilisées ci-dessus sont reprises ici, augmentées des lettres respectivement a, b et c afin de désigner ce qui se rapporte respectivement au premier groupe, au deuxième groupe et au troisième groupe.

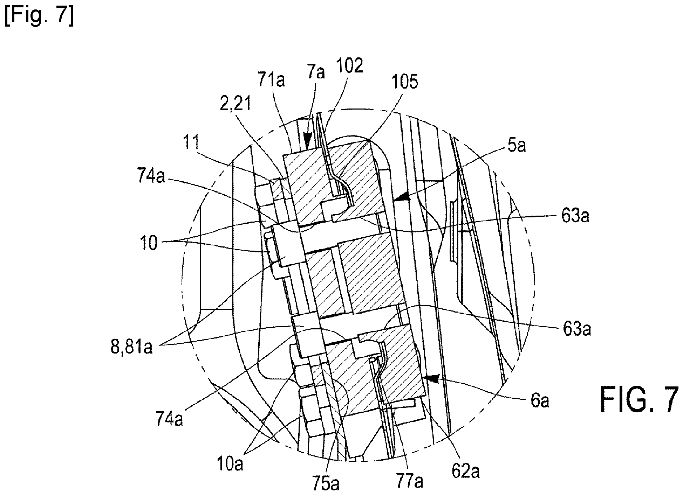

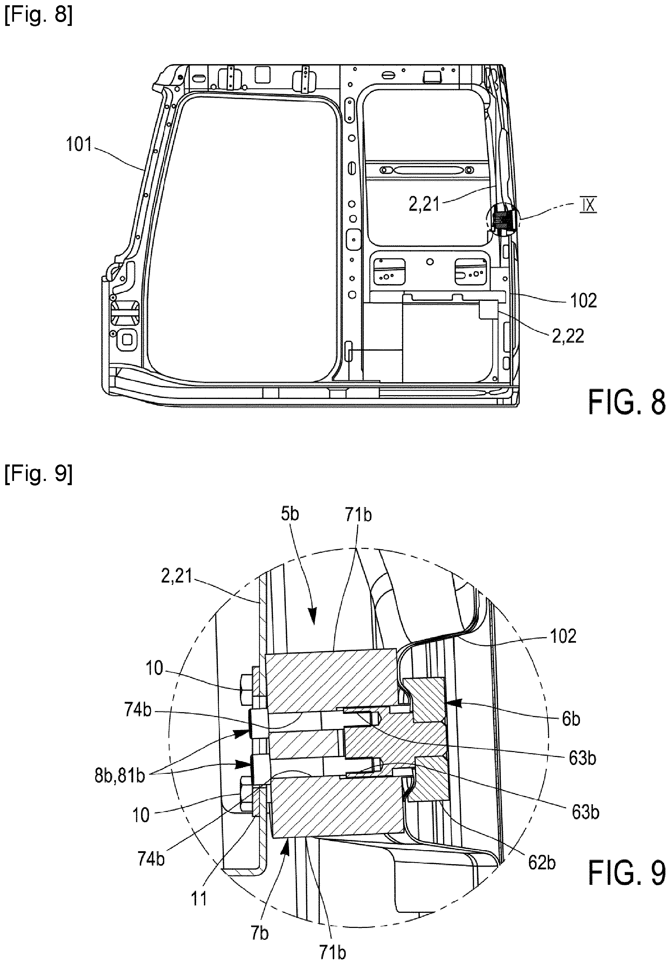

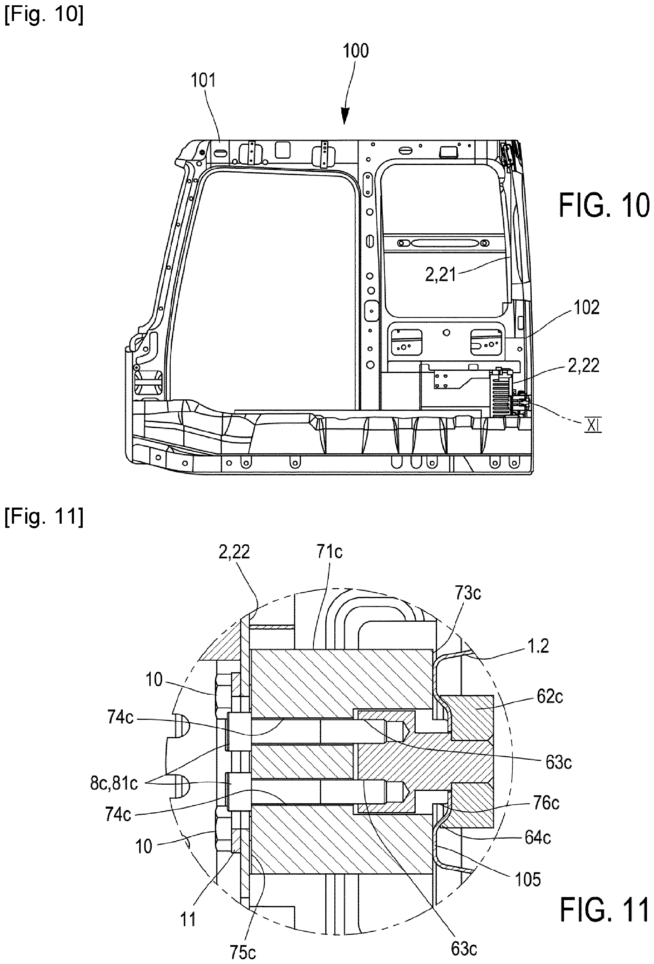

Un élément 5a de fixation du premier groupe est illustré sur la vue de détail de la figure 7, un élément 5b du deuxième groupe est illustré sur la vue de détail de la figure 9 et un élément 5c du troisième groupe est illustré sur la vue de détail de la figure 10.

Les éléments 5a de fixation du premier groupe sont destinés à fixer rigidement le support 21 supérieur sur la paroi 102 arrière en partie haute de la cabine, c'est-à-dire à proximité du toit de la cabine 100, et plus précisément au niveau de la patte 24 supérieure. Les éléments 5b du deuxième groupe sont destinés à fixer rigidement le support 21 supérieur sur la paroi 102 arrière à un niveau inférieur à celui des éléments 5a du premier groupe, par exemple juste au-dessus des pattes 25 inférieures, et les éléments 5c du troisième groupe sont destinés à fixer rigidement le support 22 inférieur sur la paroi 102 arrière.

Les efforts sur les éléments de fixation notamment en cas de chocs du camion sont les plus élevés sur les éléments 5a du premier groupe. Ainsi, les éléments 5a du premier groupe sont dimensionnés pour tenir ces efforts. Plus précisément, sur le principe déjà décrit plus haut, le diamètre de l'entretoise 7a de l'élément 5a du premier groupe est supérieur au diamètres des entretoises 7b, 7c des éléments 5b, 5c du deuxième groupe et du troisième groupe, de sorte que la distance entre les vis 10a de montage peut être supérieure pour les éléments 5a du premier groupe par rapport au deux autres groupes. En outre, pour les éléments 5a du premier groupe, le crampon 6a est réalisé monobloc, c'est-à-dire que le corps 61a et la tête 62a sont fabriqués comme étant une même pièce. Les crampons 6b, 6c des éléments 5b, 5c des autres groupes sont réalisés en deux parties.

Les éléments 5b du deuxième groupe sont ceux qui subissent les efforts les moins importants. Le diamètre du corps 71b de l'entretoise 7b peut donc être le plus faible par rapport aux deux autres groupes. En outre, la tête 62b du crampon 6b peut être fixée à force sur le corps 61b. Les éléments 5c du troisième groupe subissent des efforts intermédiaires, de sorte que le diamètre de l'entretoise 7c est intermédiaire par rapport aux deux autres groupes. Le crampon 6c peut également être réalisé en deux parties, la tête 62c étant fixée par soudure ou sertissage sur le corps 61c.

Les entretoises 7a, 7b, 7c sont également dimensionnées de manière à ce que la surface 23 principale du support 22 soit sensiblement verticale, adaptée pour que les dossiers de sièges présentent une inclinaison confortable pour un passager. En effet, vu de l'intérieur de la cabine 100, la paroi 102 arrière est sensiblement inclinée. Afin de redresser la surface 23 principale, les pattes 24 supérieures et 25 inférieures peuvent être courbées, et les entretoises 7a, 7b, 7c sont d'une dimension adaptée pour que d'une part la paroi 102 arrière soit pincée entre la face 73a, 73b, 73c arrière des entretoises 7a, 7b, 7c et la tête 62a, 62b, 62c des crampons 6a, 6b, 6c et d'autre part la face 75a, 75b, 75c avant des entretoises 7a, 7b, 7c soient en contact avec une face arrière du support 21 supérieur ou du support 22 inférieur de l'ensemble 2 de sièges.

Une fois que l'ensemble 2 de sièges est fixé rigidement sur la paroi 102 arrière grâce aux éléments de fixation, l'assise et le dossier des sièges peuvent être montés sur l'ensemble 2 de siège. En variante, l'assise et le dossier des sièges peuvent avoir été montés sur l'ensemble 2 de sièges avant que celui-ci ne soit fixé à la paroi 102 arrière. Les ceintures de sécurité peuvent également être mises en place sur les points 3a, 3b de retenue. Eventuellement, un garnissage peut être remis en place de manière à recouvrir les supports 21 supérieur et 22 inférieur.

Le système 1 d'installation permet ainsi de monter des sièges arrière dans une cabine 100 de camion qui en est originalement dépourvue, sans modifier la structure du châssis. Ainsi, le démontage du système 1 d'installation est possible sans avoir affaibli la structure du châssis.

Le montage du système 1 d'installation peut se faire rapidement, la mise en place de l'ensemble de fixation étant aisé. Les éléments 5 de fixation assurent une fixation présentant une tenue aux efforts compatibles avec les normes et exigences en matière de sécurité, de sorte que les points d'ancrage des ceintures de sécurité peuvent être portés sur le support 21 supérieur et le support 22 inférieur. Il n'est donc pas nécessaire de prévoir des opérations supplémentaires de montage des points d'ancrage des ceintures de sécurité qui toucheraient à l'intégrité du châssis de la cabine 100. Ainsi, comparé à l'art antérieur connu dans lequel la modification d'une cabine de camion peut prendre jusqu'à quinze jours, le montage du système 1 d'installation, impliquant le démontage de la couchette, peut être réalisé en deux jours. La durée d'immobilisation du camion est ainsi réduite.

## Revendications

1. Système (**1**) d'installation d'au moins un siège dit arrière dans une cabine (**100**) de camion comprenant au moins un siège dit avant, le système (1) d'installation comportant :
- un ensemble (**2**) de siège comprenant au moins deux points (**3a**, **3b, 3c, 3d**) d'ancrage d'une ceinture de sécurité ;
- un ensemble (**4**) de fixation destiné à fixer rigidement l'ensemble (2) de siège sur une paroi (**101, 102**) de la cabine (**100**),
- -au moins un élément (**5, 5a, 5b, 5c**) de fixation, le système étant **caractérisé en ce que** l'élément (**5, 5a, 5b, 5c**) de fixation comprend un crampon (**6, 6a, 6b, 6c**) et une entretoise (**7, 7a, 7b, 7c**) solidaire du crampon (**6, 6a, 6b, 6c**) par l'intermédiaire d'un dispositif (**8, 8a, 8b, 8c**) de serrage permettant de régler la force de serrage entre le crampon (**6, 6a, 6b, 6c**) et l'entretoise (**7, 7a, 7b, 7c**), le crampon (**6, 6a, 6b, 6c**) étant destiné à être inséré dans une ouverture préexistante d'une paroi (**101, 102**) de la cabine (**100**) de camion de sorte que l'élément (**5, 5a, 5b, 5c**) de fixation serre la paroi (**101, 102**) entre le crampon (**6, 6a, 6b, 6c**) et l'entretoise (**7, 7a, 7b, 7c**), l'entretoise (**7, 7a, 7b, 7c**) comprenant en outre un dispositif (**10, 10a, 10b, 10c, 11, 11a, 11b, 11c**) de fixation rigide sur l'ensemble (**2**) de siège.

2. Système (**1**) selon la revendication 1, dans lequel au moins une assise est fixée rigidement à l'ensemble (**2**) de siège.

3. Système (**1**) selon l'une quelconque des revendications précédentes dans lequel le dispositif (**8, 8a, 8b, 8c**) de serrage comprend au moins une vis (**81, 81a, 81b, 81c**) de solidarisation insérée dans un perçage de l'entretoise (**6, 6a, 6b, 6c**) et dans un perçage du crampon (**7, 7a, 7b, 7c**), la force de serrage entre le crampon (**6, 6a, 6b, 6c**) et l'entretoise (**7, 7a, 7b, 7c**) étant réglée par le serrage de la vis (**81, 81a, 81b, 81c**) de solidarisation.

4. Système (**1**) selon l'une quelconque des revendications précédentes dans lequel l'ensemble (**2**) de siège comprend deux supports de sièges, à savoir un support (**21**) dit supérieur destiné à supporter au moins un dossier d'un siège et un support (**22**) dit inférieur destiné à supporter au moins une assise d'un siège, le support (**21**) supérieur et le support (**22**) inférieur étant destinés à être fixés à au moins une paroi (**101, 102**) de la cabine (**100**) de camion à l'aide de l'ensemble (**4**) de fixation.

5. Cabine (**100**) de camion comprenant au moins un siège dit avant, la cabine comportant en outre au moins un système (**1**) d'installation selon l'une quelconque des revendications précédentes, et dans laquelle l'ensemble (**2**) de siège est fixé rigidement sur au moins une paroi (**101, 102**) de la cabine (**100**)à l'aide d'un ensemble (**4**) de fixation, un crampon (**6, 6a, 6b, 6c**) d'au moins un élément (**5, 5a, 5b, 5c**) de fixation de l'ensemble (**4**) de fixation étant inséré dans une ouverture préexistante de la paroi (**101, 102**) de la cabine (**100**)de camion, l'élément (**5, 5a, 5b, 5c**) de fixation serrant la paroi (**101, 102**) de la cabine (**100**) entre le crampon (**6, 6a, 6b, 6c**) et l'entretoise (**7, 7a, 7b, 7c**), l'entretoise (**7, 7a, 7b, 7c**) étant en outre fixée rigidement sur l'ensemble (**2**) de siège de manière à s'étendre entre la paroi (**101, 102**) et l'ensemble (**2**) d'assise.

6. Procédé de montage d'un système (**1**) d'installation d'au moins un siège selon l'une quelconque des revendications 1 à 4 dans une cabine (**100**) de camion, la cabine (**100**) de camion comprenant au moins un siège dit avant et une couchette située derrière le siège avant, le procédé comprenant les étapes suivantes :
- le retrait de la couchette ;
- le retrait d'au moins une partie du garnissage d'au moins une paroi (**101, 102**) du châssis de la cabine (**100**) de manière à révéler au moins en partie ladite paroi (**101, 102**) comprenant une ouverture préexistante ;
- la fixation de l'ensemble (**2**) de siège sur la paroi arrière au moyen de l'ensemble (**4**) de fixation et le réglage de la force de serrage d'au moins un élément (**5, 5a, 5b, 5c**) de fixation de l'ensemble (**4**) de fixation.

7. Procédé selon la revendication précédente, dans lequel la fixation sur l'ensemble de siège d'au moins une assise de siège est réalisée après la fixation de l'ensemble de siège sur la paroi arrière au moyen de l'ensemble de fixation.

8. Procédé selon la revendication 6, dans lequel la fixation sur l'ensemble de siège d'au moins une assise de siège est réalisée avant la fixation de l'ensemble de siège sur la paroi arrière au moyen de l'ensemble de fixation.

9. Procédé selon l'une quelconque des revendications 6 à 8 comprenant initialement la détermination d'un modèle numérique du châssis de la cabine (**100**) de camion et la détermination de caractéristiques du système 1 d'installation de manière à le faire correspondre au châssis de la cabine (**100**).

10. Procédé selon la revendication précédente, dans lequel la détermination de caractéristiques du système (1) d'installation comprend la détermination de la position des perçages de l'ensemble (**2**) de sièges pour coïncider avec des ouvertures et/ou des perçages préexistants sur la paroi (**101, 102**) du châssis de la cabine (**100**), et des dimensions des éléments (**5, 5a, 5b, 5c**) de fixation.

## Patentansprüche

1. System (**1**) zum Installieren mindestens eines sogenannten Rücksitzes in einer Lkw-Kabine (**100**) mit mindestens einem sogenannten Vordersitz, wobei das Installationssystem (**1**) Folgendes umfasst:
- eine Sitzanordnung (**2**) mit mindestens zwei Sicherheitsgurtverankerungspunkten (**3a, 3b, 3c, 3d**);
- eine Befestigungsanordnung (**4**) zum starren Befestigen der Sitzanordnung (**2**) an einer Wand (**101, 102**) der Kabine (**100**),
- mindestens ein Befestigungselement (**5, 5a, 5b, 5c**), wobei das System **dadurch gekennzeichnet ist, dass** das Befestigungselement (**5, 5a, 5b, 5c**) eine Klammer (**6, 6a, 6b, 6c**) und einen Abstandshalter (**7, 7a, 7b, 7c**) umfasst, der mit der Klammer (**6, 6a, 6b, 6c**) über eine Klemmvorrichtung (**8, 8a, 8b, 8c**) fest verbunden ist, die es zulässt, die Klemmkraft zwischen der Klammer (**6, 6a, 6b, 6c**) und dem Abstandshalter (**7, 7a, 7b, 7c**) zu regulieren, wobei die Klammer (**6, 6a, 6b, 6c**) zum Einführen in eine bereits vorhandene Öffnung einer Wand (**101, 102**) der Lkw-Kabine (**100**) bestimmt ist, so dass das Befestigungselement (**5, 5a, 5b, 5c**) die Wand (**101, 102**) zwischen der Klammer (**6, 6a, 6b, 6c**) und dem Abstandshalter (**7, 7a, 7b, 7c**) festklemmt, wobei der Abstandshalter (**7, 7a, 7b, 7c**) außerdem eine Vorrichtung (**10, 10a, 10b, 10c, 11, 11a, 11b, 11c**) zum starren Befestigen an der Sitzanordnung (**2**) umfasst.

2. System (**1**) nach Anspruch 1, wobei mindestens eine Sitzfläche starr an der Sitzanordnung (**2**) befestigt ist.

3. System (**1**) nach einem der vorherigen Ansprüche, wobei die Klemmvorrichtung (**8, 8a, 8b, 8c**) mindestens eine Festverbindungsschraube (**81, 81a, 81b, 81c**) umfasst, die in eine Bohrung des Abstandshalters (**6, 6a, 6b, 6c**) und in eine Bohrung der Klammer (**7, 7a, 7b, 7c**) eingeführt wird, wobei die Klemmkraft zwischen der Klammer (**6, 6a, 6b, 6c**) und dem Abstandshalter (**7, 7a, 7b, 7c**) durch Anziehen der Festverbindungsschraube (**81, 81a, 81b, 81c**) reguliert wird.

4. System (**1**) nach einem der vorherigen Ansprüche, wobei die Sitzanordnung (**2**) zwei Sitzträger umfasst, nämlich einen sogenannten oberen Träger (**21**) zum Tragen mindestens einer Rückenlehne eines Sitzes und einen sogenannten unteren Träger (**22**) zum Tragen mindestens einer Sitzfläche eines Sitzes, wobei der obere Träger (**21**) und der untere Träger (**22**) zum Befestigen an mindestens einer Wand (**101, 102**) der Lkw-Kabine (**100**) mithilfe der Befestigungsanordnung (**4**) bestimmt sind.

5. Lkw-Kabine (**100**) mit mindestens einem sogenannten Vordersitz, wobei die Kabine außerdem mindestens ein Installationssystem (**1**) nach einem der vorherigen Ansprüche aufweist, und wobei die Sitzanordnung (**2**) starr an mindestens einer Wand (**101, 102**) der Kabine (**100**) mithilfe einer Befestigungsanordnung (**4**) befestigt ist, wobei eine Klammer (**6, 6a, 6b, 6c**) von mindestens einem Befestigungselement (**5, 5a, 5b, 5c**) der Befestigungsanordnung (**4**) in eine bereits vorhandene Öffnung der Wand (**101, 102**) der Lkw-Kabine (**100**) eingeführt wird, wobei das Befestigungselement (**5, 5a, 5b, 5c**) die Wand (**101, 102**) der Kabine (**100**) zwischen der Klammer (**6, 6a, 6b, 6c**) und dem Abstandshalter (**7, 7a, 7b, 7c**) festklemmt, wobei der Abstandshalter (**7, 7a, 7b, 7c**) außerdem starr an der Sitzanordnung (**2**) befestigt ist, so dass er sich zwischen der Wand (**101, 102**) und der Sitzanordnung (**2**) erstreckt.

6. Verfahren zum Montieren eines Systems (**1**) zum Installieren mindestens eines Sitzes nach einem der Ansprüche 1 bis 4 in einer Lkw-Kabine (**100**), wobei die Lkw-Kabine (**100**) mindestens einen sogenannten Vordersitz und einen hinter dem Vordersitz befindlichen Liegesitz beinhaltet, wobei das Verfahren die folgenden Schritte beinhaltet:
- Entfernen des Liegesitzes;
- Entfernen mindestens eines Teils der Polsterung von mindestens einer Wand (**101, 102**) des Rahmens der Kabine (**100**), so dass zumindest ein Teil der genannten Wand (**101, 102**) freigelegt wird, in dem bereits eine Öffnung vorhanden ist;
- Befestigen der Sitzanordnung (**2**) an der Rückwand mittels der Befestigungsanordnung (**4**) und Regulieren der Klemmkraft von mindestens einem Befestigungselement (**5, 5a, 5b, 5c**) der Befestigungsanordnung (**4**).

7. Verfahren nach dem vorherigen Anspruch, wobei die Befestigung an der Sitzanordnung von mindestens einer Sitzfläche des Sitzes nach der Befestigung der Sitzanordnung an der Rückwand mittels der Befestigungsanordnung erfolgt.

8. Verfahren nach Anspruch 6, wobei die Befestigung an der Sitzanordnung von mindestens einer Sitzfläche des Sitzes vor der Befestigung der Sitzanordnung an der Rückwand mittels der Befestigungsanordnung erfolgt.

9. Verfahren nach einem der Ansprüche 6 bis 8, das zunächst das Bestimmen eines digitalen Modells des Rahmens der Lkw-Kabine (100) und das Bestimmen von Charakteristiken des Installationssystems (**1**) beinhaltet, so dass es mit dem Rahmen der Kabine (**100**) übereinstimmt.

10. Verfahren nach dem vorherigen Anspruch, wobei das Bestimmen von Charakteristiken des Installationssystems (**1**) das Bestimmen der Position der Bohrungen der Sitzanordnung (**2**) beinhaltet, so dass sie mit bereits vorhandenen Öffnungen und/oder Bohrungen an der Wand (**101, 102**) des Rahmens der Kabine (**100**) und Abmessungen der Befestigungselemente (**5, 5a, 5b, 5c**) übereinstimmen.

## Claims

1. System (**1**) for installing at least one rear seat in a lorry cab (**100**) comprising at least one front seat, the installation system (**1**) including:
- a seat assembly (**2**) comprising at least two anchorage points (**3a, 3b, 3c, 3d**) for a seat belt;
- a fastening assembly (**4**) intended to rigidly fasten the seat assembly (**2**) on a wall (**101, 102**) of the cab (**100**),
- at least one fastening element (**5, 5a, 5b, 5c**),
the system being **characterized in that** the fastening element (**5, 5a, 5b, 5c**) comprises a clamp (**6, 6a, 6b, 6c**) and a spacer (**7, 7a, 7b, 7c**) secured to the clamp (**6, 6a, 6b, 6c**) by means of a tightening device (**8, 8a, 8b, 8c**) making it possible to adjust the tightening force between the clamp (**6, 6a, 6b, 6c**) and the spacer (**7, 7a, 7b, 7c**), the clamp (**6, 6a, 6b, 6c**) being intended to be inserted into a pre-existing opening in a wall (**101, 102**) of the lorry cab (**100**) such that the fastening element (**5, 5a, 5b, 5c**) tightens the wall (**101, 102**) between the clamp (**6, 6a, 6b, 6c**) and the spacer (**7, 7a, 7b, 7c**), the spacer (**7, 7a, 7b, 7c**) moreover comprising a device (**10, 10a, 10b, 10c, 11, 11a, 11b, 11c**) for rigid fastening on the seat assembly (**2**).

2. System (**1**) according to claim 1, in which at least one seating base is rigidly fastened to the seat assembly (**2**).

3. System (**1**) according to any one of the preceding claims in which the tightening device (**8, 8a, 8b, 8c**) comprises at least one securing bolt (**81, 81a, 81b, 81c**) inserted into a hole in the spacer (**6, 6a, 6b, 6c**) and into a hole in the clamp (**7, 7a, 7b, 7c**), the tightening force between the clamp (**6, 6a, 6b, 6c**) and the spacer (**7, 7a, 7b, 7c**) being adjusted by the tightening of the securing bolt (**81, 81a, 81b, 81c**)**.**

4. System (**1**) according to any one of the preceding claims in which the seat assembly (**2**) comprises two seat supports, namely an upper support (**21**) intended to support at least one backrest of a seat and a lower support (**22**) intended to support at least one seating base of a seat, the upper support (**21**) and the lower support (**22**) being intended to be fastened to at least one wall (**101, 102**) of the lorry cab (**100**) with the aid of the fastening assembly (**4**).

5. Lorry cab (**100**) comprising at least one front seat, the cab moreover including at least one installation system (**1**) according to any one of the preceding claims, and in which the seat assembly (**2**) is rigidly fastened on at least one wall (**101, 102**) of the cab (**100**) with the aid of a fastening assembly (**4**), a clamp (**6, 6a, 6b, 6c**) of at least one fastening element (**5, 5a, 5b, 5c**) of the fastening assembly (**4**) being inserted into a pre-existing opening in the wall (**101, 102**) of the lorry cab (**100**), the fastening element (**5, 5a, 5b, 5c**) clamping the wall (**101, 102**) of the cab (**100**) between the clamp (**6, 6a, 6b, 6c**) and the spacer (**7, 7a, 7b, 7c**), the spacer (**7, 7a, 7b, 7c**) moreover being rigidly fastened on the seat assembly (2) so as to extend between the wall (**101, 102**) and the seat assembly (**2**).

6. Method for mounting a system (**1**) for installing at least one seat according to any one of claims 1 to 4 in a lorry cab (**100**), the lorry cab (**100**) comprising at least one front seat and a bunk located behind the front seat, the method comprising the following steps:
- the removal of the bunk;
- the removal of at least a portion of the trim of at least one wall (**101, 102**) of the frame of the cab (**100**) so as to at least partially reveal said wall (**101, 102**) comprising a pre-existing opening;
- the fastening of the seat assembly (**2**) on the rear wall by means of the fastening assembly (**4**) and the adjustment of the tightening force of at least one fastening element (**5, 5a, 5b, 5c**) of the fastening assembly (**4**).

7. Method according to the preceding claim, in which the fastening on the seat assembly of at least one seat base is carried out after the fastening of the seat assembly on the rear wall by means of the fastening assembly.

8. Method according to claim 6, in which the fastening on the seat assembly of at least one seat base is carried out before the fastening of the seat assembly on the rear wall by means of the fastening assembly.

9. Method according to any one of claims 6 to 8 initially comprising determining a digital model of the frame of the lorry cab (**100**) and determining characteristics of the installation system (**1**) so as to make it correspond to the frame of the cab (**100**).

10. Method according to the preceding claim, in which determining characteristics of the installation system (**1**) comprises determining the position of the holes in the seat assembly (**2**) to correspond with pre-existing openings and/or holes in the wall (**101, 102**) of the frame of the cab (**100**) and dimensions of the fastening elements (**5, 5a, 5b, 5c**).
